Europäisches Patentamt

European Patent Office

Office européen des brevets

(19)

(11) Publication number: **0 140 491**
**B1**

(12) **EUROPEAN PATENT SPECIFICATION**

(45) Date of publication of patent specification: **09.03.88**

(21) Application number: **84305314.1**

(22) Date of filing: **06.08.84**

(51) Int. Cl.⁴: **B 60 J 7/05**

(54) **Sliding roof for motor vehicles.**

(30) Priority: **19.08.83 GB 8322443**
**08.10.83 GB 8326969**
**14.02.84 GB 8403825**

(43) Date of publication of application:
**08.05.85 Bulletin 85/19**

(45) Publication of the grant of the patent:
**09.03.88 Bulletin 88/10**

(84) Designated Contracting States:
**DE FR GB IT NL SE**

(56) References cited:
**GB-A-2 090 565**
**US-A-4 364 601**
**US-A-4 403 805**

(73) Proprietor: **Britax Weathershields Limited**
**180 Sherlock Street**
**Birmingham B5 7EH (GB)**

(72) Inventor: **Fisher, Sidney Edward**
**645 Fox Hollies Road Hall Green**
**Birmingham West Midlands B28 9DW (GB)**
Inventor: **Pollard, John William**
**601 Bordesley Green**
**Birmingham 9 West Midslands (GB)**

(74) Representative: **Hollinghurst, Antony**
**Britax Limited Patent Department Kingsham Road**
**Chichester West Sussex PO19 2UG (GB)**

EP 0 140 491 B1

Courier Press, Leamington Spa, England.

# Description

This invention relates to a sliding roof for a motor vehicle of the type having a rigid roof panel which is supported at each side by front and rear guide means on respective guide tracks extending along each side of an opening in the vehicle roof and behind said opening below the vehicle roof, the front guide means being adapted to permit pivotal movement of the panel about a horizontal axis at right-angles to the guide tracks and each rear guide means comprising a guide shoe arranged to be driven along the corresponding guide track and connected to the roof panel by a linkage, each of the connections at the ends of the linkage being arranged to permit relative angular movement over a limited range between an orientation such that the panel is in its fully lowered position and an orientation such that the linkage projects above the guide track.

A sliding roof of this kind is disclosed in Patent Specification No. US—A—4364601. Each linkage comprises a single rigid link, the length of which is determined by the height to which the rear edge of the panel is to be raised. When the panel is fully lowered, the link is almost horizontal. Consequently a very large horizontal force has to be applied to the rear shoe to produce the necessary vertical force to raise the rear edge of the panel from its fully lowered position.

According to the invention, the linkage comprises a chain of at least two links, each of the connections at the ends of the chain and between adjacent links thereof being arranged to permit relative angular movement over a limited range between an orientation such that adjacent links are in line with each other when the panel is in its fully lowered position and an orientation such that adjacent links are at angles of less than 180 deg to each other and project above the guide track, catch means being arranged to retain said links at said angles of less than 180 deg and the release means being operative to cause disengagement of said catch means when the angle between the track and the link nearer to the guide shoe is less than a predetermined magnitude.

In a preferred form of the invention there are two links connecting the roof panel to the rear guide shoe. The length of the first link, which is connected to the roof panel, is chosen to be such that the first link is substantially vertical when the roof panel is level with the vehicle roof. This means that, when the roof panel is level with the vehicle roof, the first link is going through a dead-centre position with the result that the roof panel is substantially level with the vehicle roof over an extended range of positions of the rear guide shoe, thus giving a relatively large tolerance of acceptable positions in which the latter may stop when the roof panel is in its closed position.

The catch means may comprise a pawl pivotally mounted on the pivot connecting the first link to the roof panel, the pawl having a detent formation on its free end which engages with a complementary formation on the second link. The catch means is preferably spring biased into its engaged position, for example by a spring moulded integrally with the second link. The release means may comprise a formation on the rear guide shoe which engages with the catch means as the roof panel moves downwards.

Alternatively, the catch means may comprise a lever pivotally mounted on the pivot connecting the first link to the roof panel and having a pin at its other end which engages in an L-shaped slot in the second link, the length of the lever relative to that of the first link and the position of the slot in the second link being such that the pin travels along the long arm thereof as the links execute their relative angular movement and moves along the short limb when the links are at their obtuse angles to each other. The pin is preferably spring biased so as to move along the short limb away from its junction with the long limb, a protuberance on the end of the lever engaging with the track to move the pin back into line with the long limb as the roof panel is lowered.

The front guide means may comprise a front shoe which is slidable along its respective guide track and, in addition forms one part of a catch mechanism track, the other part of which comprises a recess formed in the guide track adjacent to its front end. The front shoe is slidable along the guide track, into alignment with the recess and is then pivotable about an axis parallel to the horizontal pivot axis of the panel so as to raise one end of the shoe carrying said latter axis and lower the other end of the shoe so that it abuts against one edge of said recess to inhibit rearward movement while said latter axis is raised, link means being arranged to cause said pivotal movement of the front shoe in response to continued forwared movement of the rear shoe after the front shoe has reached alignment with the recess.

Each front guide means may comprise a support arm one end of which carries a guide shoe arranged to slide along the corresponding guide track and the other end of which is pivotally mounted on the underside of the panel at a location to the rear of the guide shoe for angular movement about a transverse axis, resilient means for biasing said one end of the support arm into abutment with a stop on the under side of the panel, so that the front end of the latter is below the level of the vehicle roof, and lift means having a first part mounted on the panel and a second part mounted on the track whereby the support arm is moved away from the stop to raise the front edge of the panel to the level of the vehicle roof as the panel slides into alignment with the opening therein.

The support arm may comprise one limb of a V-shaped member moulded in plastics material, the other limb being secured to the panel and an integrally moulded hinge formation being provided at the junction between the two limbs. One of the limbs may extend rearwardly beyond the hinge formation and serve as an attachment point for the rear support means.

The first part of the lift means may comprise a cam follower with the second part taking the form of a camming member mounted on the track. The camming member may comprise a lever which is pivotally mounted on the track and carries a wind deflector on its free end which is resiliently biased into a position in which it projects above the vehicle roof along the front edge of the opening therein. The lift means thus serves a dual purpose of retracting the wind deflector and raising the front edge of the panel as the latter slides towards its closed position.

Alternatively, the first part of the lift means may comprise a lever pivotally attached both to the panel and to the support arm at a location adjacent to the guide shoe. The second part of the lift means comprises a formation on the track which engages with the lever to cause angular movement thereof so as to move the support arm away from the stop.

In order to ensure that the roof panel does not start to slide rearwardly until it is in its fully lowered position below the vehicle roof, the front guide means is preferably provided with one part of a catch mechanism, the other part of which is secured to the guide track. This mechanism is arranged to disengage only when the rear edge of the roof panel has been lowered.

An embodiment of the invention will now be described, by way of example, with reference to the accompanying drawings, in which:

Figure 1 is a fragmentary perspective sectional view of a motor car fitted with a sliding roof assembly of the type to which the invention relates, showing the panel in its closed position and each of its two alternative open positions;

Figure 2 is a longitudinal sectional view of a sliding roof assembly in accordance with a first embodiment of the invention;

Figures 3 to 6 are longitudinal sectional views illustrating the rear guide means of the embodiment illustrated in Figure 2 in each of four alternative positions;

Figure 7 is a scrap view showing the front guide means of the embodiment illustrated in Figure 2 on an enlarged scale;

Figures 8 to 11 are longitudinal sectional views illustrating the front guide means of a second embodiment of the invention in each of four alternative positions;

Figures 12, 13 and 14 are longitudinal sectional views illustrating the rear guide means of the second embodiment of the invention in each of three alternative positions corresponding to Figures 8, 10 and 9 respectively;

Figures 15 to 18 are longitudinal sectional views illustrating the front guide means of a third embodiment of the invention in each of four alternative positions;

Figure 19 is a longitudinal sectional view, similar to Figure 2, of a fourth embodiment of the invention, with the panel in the closed position;

Figure 20 is a transverse cross-sectional view of one of the guide tracks of the embodiment shown in Figure 19; and

Figures 21 and 22 are longitudinal sectional views of the embodiment shown in Figure 19 but with the panel in the fully lowered and fully raised positions respectively.

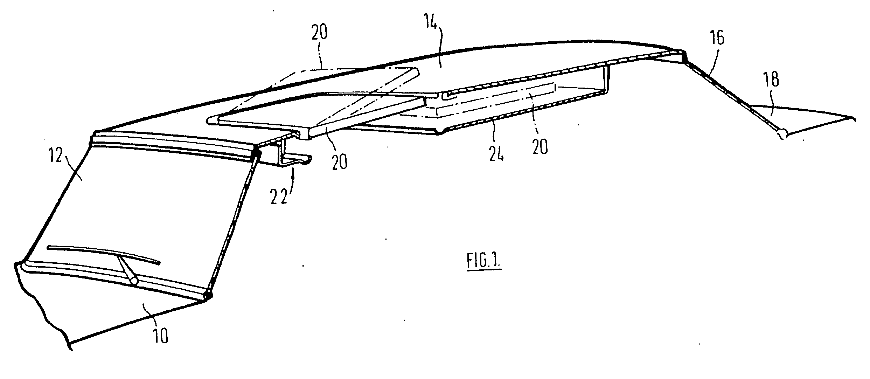

Figure 1 shows the upper part of the body of a saloon motor car comprising a bonnet 10, a windscreen 12, a roof 14, a rear window 16 and a boot 18. A movable glass roof panel 20 is located in a frame 22 bounding an opening in the vehicle roof and including a drain tray 24 forming the bottom of a chamber into which the roof panel 20 can be slid below the vehicle roof 14.

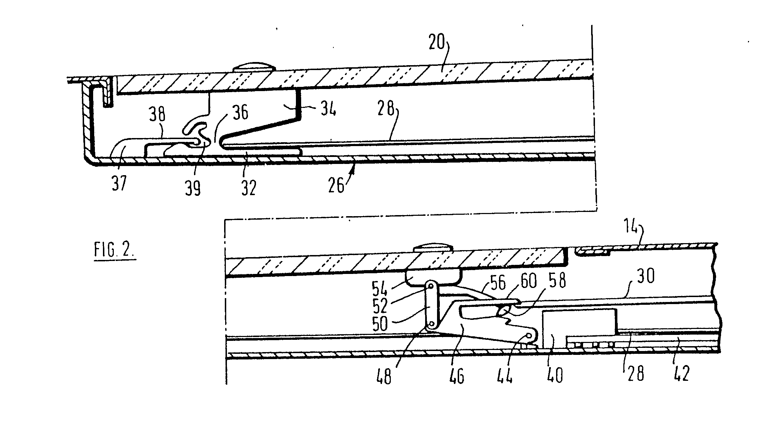

A respective guide track, on which the panel 20 is slidable, extends along each side of the opening in the vehicle roof 14 and into the space above the drain tray 24. Figure 2 shows the track 26 on the car driver's right-hand side of the opening in the vehicle roof 14, in longitudinal cross-section. It should be understood that, in all the embodiments of the invention to be described hereinafter, the means for supporting the other side of the panel on the other side of the opening in the vehicle roof 14 is a mirror image of the track 26 and its associated components. The track 26 consists of a generally U-shaped channel, the side walls of which have respective lower inwardly directed flanges 28 extending along substantially the whole length thereof and upper inwardly directed flanges 30 extending along the part thereof which is above the drain tray 24.

The front end of the panel 20 is supported on the track 26 by a front shoe 32 which is moulded integrally with a support member 34 secured to the lower surface of the panel 20. The support member 32 is connected to the front shoe 32 by an integral hinge formation 36. A stop member 37, mounted on the track 26, has a rearwardly projecting resilient finger 38 which engages in a recess 39 in the shoe 32. The recess 39 is shaped so that the finger 38 can be withdrawn only when rear edge of the panel 20 is lowered. The front shoe 32 also has formations (not shown) which engage under the lower flange 28 of the guide track 26.

At the rear edge of the panel 20, a rear guide shoe 40 is located in the guide track 26 under the upper flange 30 and connected by a flexible plastic tape 42 to drive means (not shown). At its front end, the shoe 40 has a projection 41 carrying a pivot 44 which supports a first link 46. In turn the link 46 is connected by a pivot 48 to a second link 50 which is connected by a pivot 52 to a support member 54 secured to the underside of the panel 20. Also mounted on the pivot 52 is a pawl 56 having a detent 58 on its free end which engages with the upper surface of the first link 46, a leaf-spring 60, moulded integrally with the latter, serving to maintain this engagement.

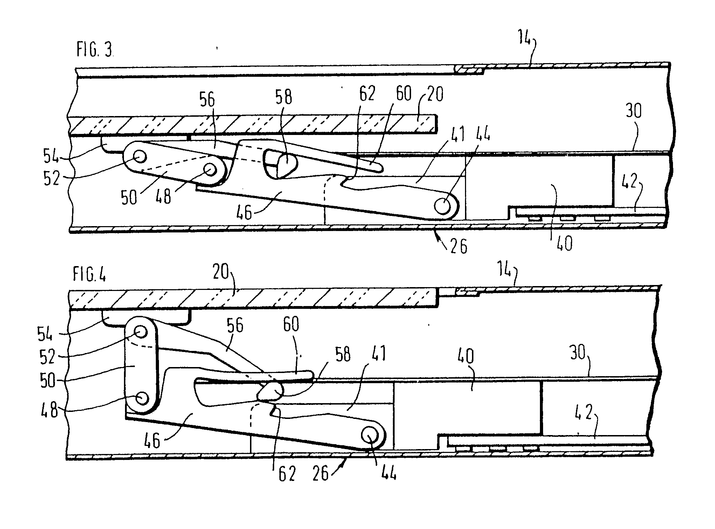

Referring to Figure 3, when the two links 46 and 50 are substantially in line with one another, the rear edge of the panel 20 is in its lower most position in which it is clear to slide below the vehicle roof 14, such sliding movement being effected by means of the tape 42. A formation (not shown) on the pawl 56 engages under the flange 30 of the guide track 26 so as to prevent the roof panel from being raised when in this position.

When the direction of the drive applied to the tape 42 is reversed, the rear shoe 40 moves forwards to the position shown in Figure 4 in which the above-mentioned formation on the pawl 56 is clear of the flange 30. Further forward movement of the rear shoe 40 causes the second link 50 to pivot about a pivot point 48 until it is in the substantially vertical position illustrated in Figure 4, the roof panel 20 then being substantially level with the vehicle roof 14.

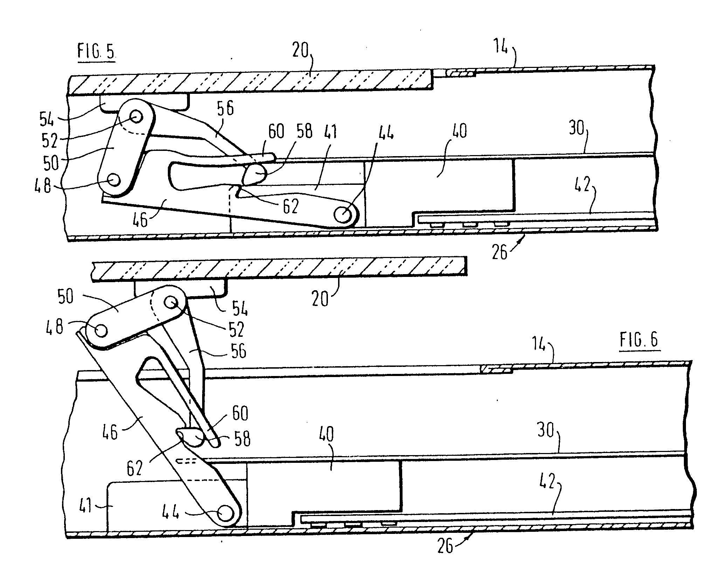

Further forward movement of the rear shoe 40 causes the second link 50 to pivot to the position shown in Figure 5. The detent 58 on the pawl 56 has now moved sufficiently far along the top of the link 46 to be in alignment with a notch 62 thereon, but it is held out of engagement with this notch because it abuts against the top surface of the projection 41 of the shoe 40, as illustrated in Figure 5.

Further forward movement of the rear shoe 40 now causes the first link 46 to pivot about the pivot point 44, lifting the rear edge of the panel 20 as shown in Figure 6. As the notch 62 rises above the top surface of the projection 41, the detent 58 moves into engagement with the notch 62, thereby securing the two links 46 and 50 at a fixed relative angle, so as to prevent any upward force on the panel 20 from causing the latter to lift independently of the movement of the rear shoe 40.

When the panel 20 is to be lowered from the position shown in Figure 6, the rear shoe 40 is moved rearwardly. When the mechanism returns to the position illustrated in Figure 5, abutment of the detent 58 against the top surface of the projection 41 causes the former to disengage from the notch 62, thus freeing the second link 50 to return to its vertical position as illustrated in Figure 4.

The drive means (not shown) is controlled by three microswitches, one adapted to sense the most forward position of the rear shoe 40, as illustrated in Figure 6, the second to sense the position of the rear shoe 40 when the panel 20 is slid fully back between the vehicle roof 14 and the drain tray 24, and the third to sense the location of the rear shoe 40 in the position illustrated in Figure 4 in which the link 50 is vertical. As already mentioned, since there is relatively little change in the height of the panel 20 as the link 50 moves from the position illustrated in Figure 5, through the dead-centre position illustrated in Figure 4 to a position corresponding to that illustrated in Figure 5 but on the other side of the dead-centre position, the precise position of the rear shoe 40, when the panel 20 is to be in its closed position, is not critical and no special precautions need to be taken to prevent the mechanism from over-shooting the position illustrated in Figure 4, for example due to inertia.

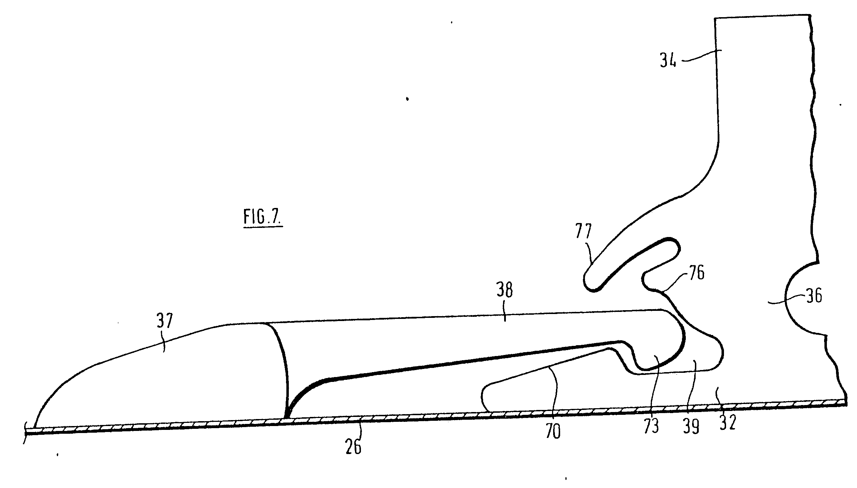

Turning now to Figure 7, in order to prevent the panel 20 from moving rearwardly except when its rear edge is in its fully lowered position as illustrated in Figure 3, the front shoe 32 has a ramp 70 on its front side, behind which ramp is the recess 39. A projection 73 carried by the resilient finger 38, which rides over this ramp 70 and into the recess 39 as the front shoe 32 moves to its fully forward positon. If the panel 20 is moved rearwardly with its rear edge lowered, the projection 73 can ride back over the ramp 70, freeing the front shoe 32. On the other hand, if the rear edge of the panel 20 is raised, both the engagement of the upper edge 76 of the recess 39 with the end of the finger 74 and the engagement of a resilient finger 77, which is carried by the support member 34, with the upper surface of the finger 38, tend to hold the projection 73 firmly in the bottom of the recess 39, thus preventing the front shoe 32, and with it the panel 20, from moving rearwardly.

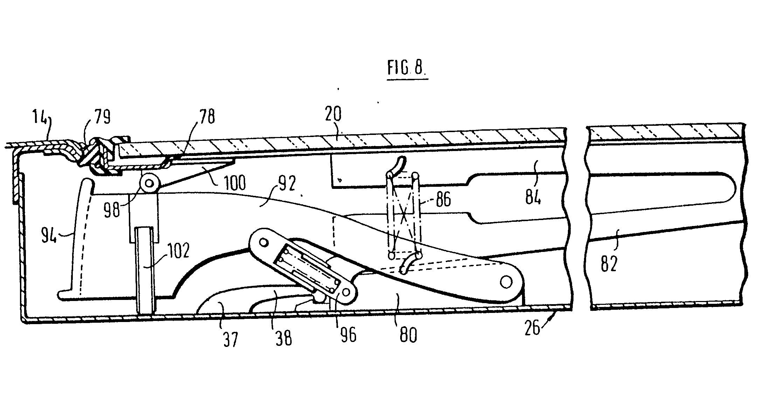

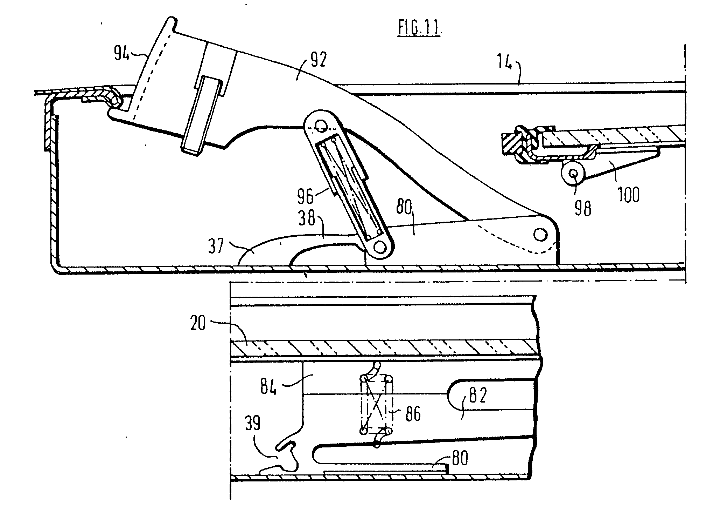

Figures 8, 9, 10 and 11 illustrate an alternative form of front support means for the panel 20, which is mounted in a frame 78 carrying a seal 79 which extends round the periphery of the panel. On each side of the panel, there is a one-piece plastics moulding consisting of a front shoe 80, a support arm 82 and an attachment member 84. The front end of the support arm 82 is connected, by an integral hinge formation, to the shoe 80 while the rear end of the support arm 82 is connected by an integral hinge formation to the attachment member 84 which is secured to the lower surface of the panel 20. The front end of the attachment member 84 is pulled downwardly into abutment with the support arm 82 by a tension spring 86. When the attachment member 84 is pulled down to its fullest extent as illustrated in Figure 11, the panel 20 is below the level of the vehicle roof 14.

Mounted on the track 26, to one side of the path of the shoe 80, is a bracket 90 having a forwardly extending arm 92 pivotally attached to its rear end. A wind deflector 94 is attached to the front end of the support arm 92 and extends across the front of the opening in the vehicle roof 14 to a corresponding support arm which is mounted on the other track. A telescopic compression spring unit 96 is pivotally attached both to the front end of the bracket 90 and to the arm 92 so as to bias the latter upwardly. The upper surface of the arm 92 is shaped to provide a cam surface which cooperates with a cam follower roller 98 which is mounted on a bracket 100 which is secured.

The operation of the front support means illustrated in Figures 8 to 11 is as follows. When the panel 20 is in its closed position level with the vehicle roof 14, as illustrated in Figure 8, the cam follower 98 presses the arm 92 down until an adjustable stop screw 102 on the latter engages with the track 26. The screw 102 is pre-adjusted so as to bring the top surface of the panel 20 precisely level with the vehicle roof 14. The spring 86 pulls the panel 20 downwards, overcoming the upward force exerted by the spring unit 96.

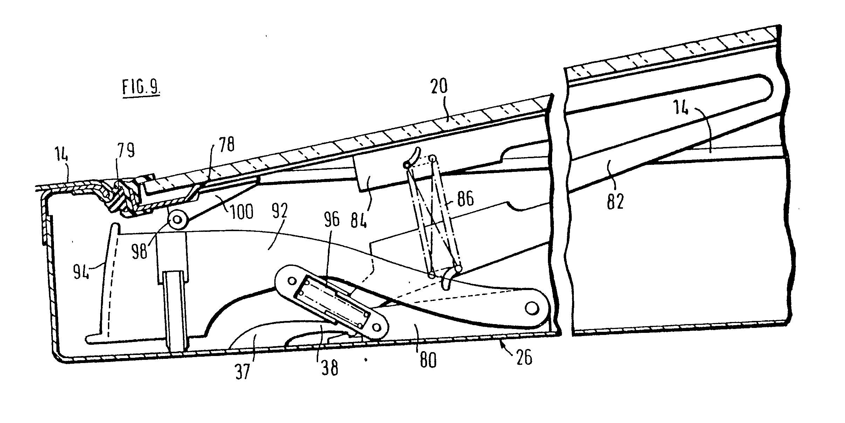

Turning to Figure 9, if the rear edge of the panel 20 is raised, the follower roller 98 serves as a pivot and the front end of the attachment member 84 moves further away from the support arm 82, further stretching the spring 86.

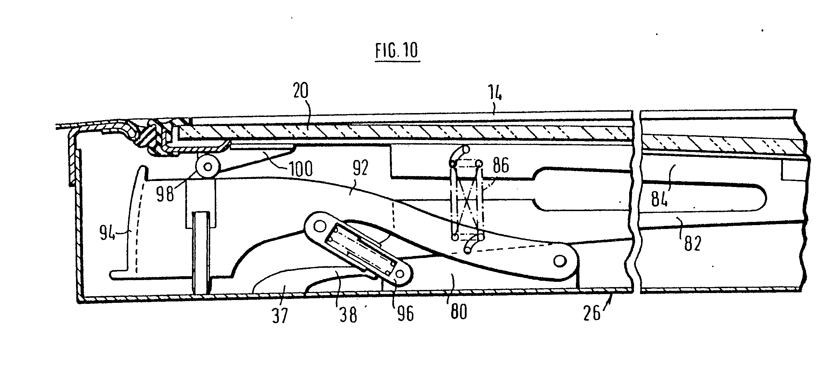

When the panel 20 is to be slid rearwardly under the vehicle roof, the rear edge of the panel 20 is first lowered to the position shown in Figure 10. The orientation of the recess 39 in the front of the shoe 80 is now such that it can disengage from the finger 38, as described above with reference to Figure 2. The panel 20 is then slid rearwardly, the follower roller 98 moving mover the upper surface of the arm 92, allowing the latter to rise so as to deploy the wind deflector 94 as illustrated in Figure 11. As the follower 98 clears the arm 92, the spring 86 pulls the front end of the attachment member 84 into abutment with the support arm 82. When the roof is to be closed again, the roller 98 engages with the upper surface of the arm 92 as the panel 20 moves forwardly, retracting the deflector 94 before raising the front edge of the panel 20 to the level of the vehicle roof 14.

The mechanism for raising the rear edge of the panel of the roof illustrated in Figures 8, 9 and 10 may be as described with reference to Figures 3 to 6. The support member 54 may be secured to the rear end of the attachment member 84 instead of being directly attached to the panel 20.

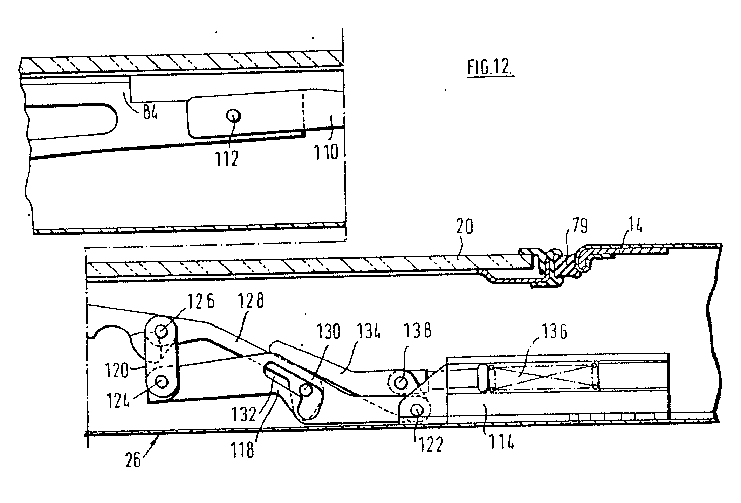

Alternatively, the rear support mechanism illustrated in Figures 12, 13 and 14 may be used. A support member 110 is attached to the rear end of the attachment member 84 by clamping means 112 which permits adjustment of their relative horizontal positions. A rear shoe 114, which is received in the track 26 is coupled to the support member 110 by two chain links 118 and 120 analogous to the links 46 and 50 of Figures 3 to 6. The link 118 is pivotally coupled at 122 to the rear shoe 114 and at 124 to the link 120. In turn, the link 120 is pivotally coupled to the support means 110 at 126.

Also mounted on the pivot 126 is a lever 128 which carries a pin 130 on its outer end for engagement in an L-shaped slot 132 in the chain link 118. A finger 134, which is mounted on the pivot 122 on the rear shoe 114, rests on the lever 128. A compression spring unit 136, also mounted on the rear shoe 114, is pivotally coupled by a pin 138 to the finger 134 so as to bias the latter in the anti-clockwise direction and thus, in turn, bias the lever 128 in the clockwise direction about the pivot 126.

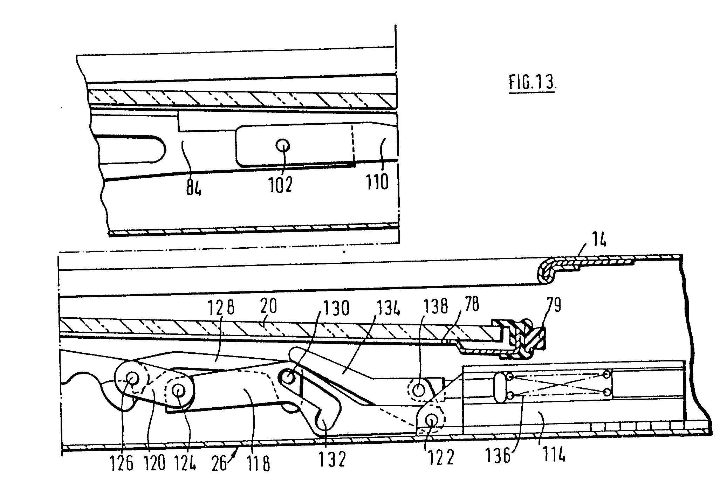

The operation of the rear support mechanism illustrated in Figures 12, 13 and 14 is as follows. Starting with the panel 20 in its closed position as illustrated in Figure 12, it will be observed that the link 120 is substantially vertical. When the rear edge of the panel 20 is to be lowered, the shoe 114 is moved rearwardly in the track 26. The pin 130 moves along the long arm of the L-shaped slot 132, allowing the link 120 to move substantially into line with the link 128 whereupon the rear edge of the panel 20 is lowered as illustrated in Figure 13. Further rearward movement of the shoe 114 causes the panel to slide under the vehicle roof 14, a formation (not shown) on the support member 110 engaging under a flange on the track 26 so as to prevent the panel 20 from being raised until it is, once again, in line with the opening in the vehicle roof 14.

When the panel 20 is to be moved back to its closed position, it is first moved forwardly into alignment with the opening. Further forward movement of the rear shoe 114 causes the pin 130 to slide back along the slot 132 to the position illustrated in Figure 12, the link 120 returning to its vertical position.

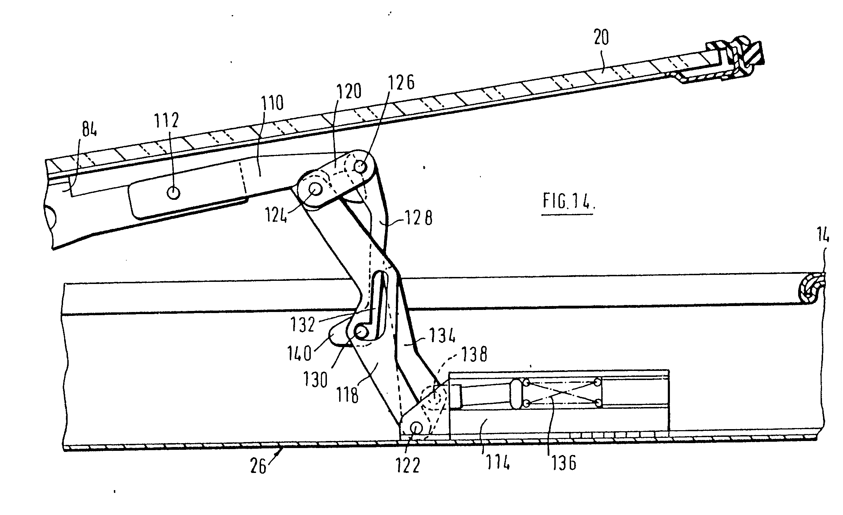

When the rear edge of the panel 20 is to be raised, the rear shoe 114 is moved further forward from the position illustrated in Figure 12. The pin 130 moves along the L-shaped slot 132 until it is in alignment with the short limb thereof whereupon it is forced along the short limb by the finger 134. The two chain links 118 and 120 are now locked together at a fixed angle. Further forward movement of the shoe 114 causes the link 118 to pivot on the pin 122, raising the rear edge of the panel 20 into the position illustrated in Figure 14. When the panel is to be returned to its closed position, the shoe 114 is slid backwards. The link 118 pivots downwardly about the pivot point 122 until a projection 140 on the end of the lever 126 engages with the track, lifting the pin 130 back into alignment with the long limb of the L-shaped slot 132. The second link 120 is now free to pivot about the pin 124 relative to the first link 118 and the assembly can return to the position illustrated in Figure 12.

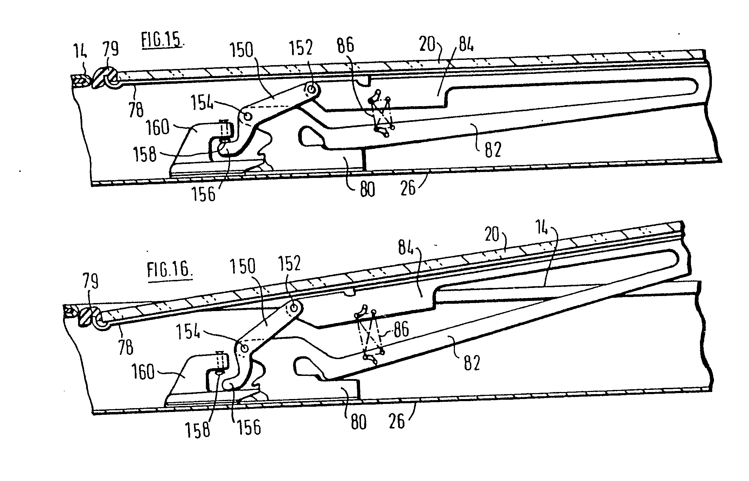

Figures 15 to 18 illustrate an alternative to the front support means shown in Figures 8 to 11 for use when it is either impossible or unnecessary to provide a wind deflector of the type described above. The moulding comprising the front shoe 80, the support arm 82 and the attachment member 84 is generally similar to that described with reference to Figures 8 to 11 and will not be described again in detail. However a lever 150 is pivotally attached by a pin 152 to the attachment member 84 and by a pin 154 to the shoe 80. The lever 150 has a hook formation 156 on its front end which engages under an adjustable stop 158 which is carried by a bracket 160 secured to the track 26. The operation of this mechanism is as follows. When the panel 20 is in its closed position, as illustrated in Figure 15, the hook 156 is in engagement with the stop 158 to hold the lever 150 at an angle such that the front end of the panel 20 is level with the front edge of the roof opening, the stop 158 having been preadjusted to achieve this. When the rear edge of the panel 20 is raised, the hook formation 156 moves downwardly but it does not meet any obstruction before the panel reaches its fully raised position.

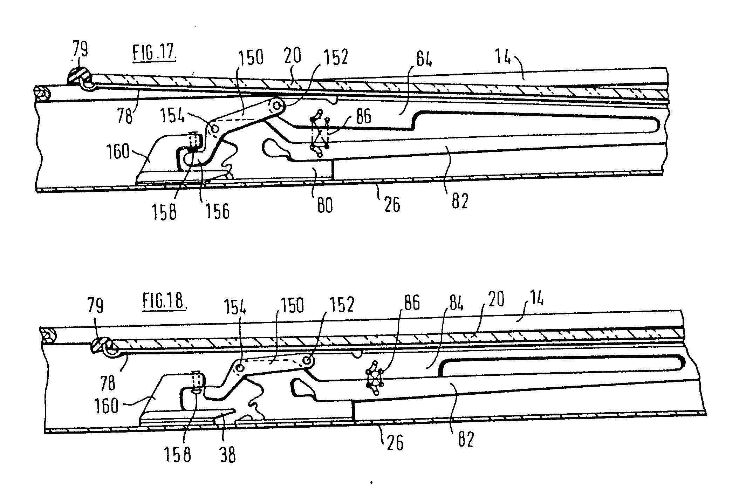

When the rear edge of the panel 20 is lowered prior to sliding below the vehicle roof 14, the front edge thereof is first slightly raised as shown in Figure 17. As the panel 20 moves rearwardly, the hook formation 156 disengages from the stop 158, allowing the spring 86 to pull the attachment member 84 down to its fully lowered position. When the roof is closed again, the lever 150 moves forwardly with the panel 20 until its hook formation abuts against the stop member 158. The lever 150 then pivots back to the position shown in Figure 17, allowing the hook formation to engage under stop member 158. When the rear edge of the panel 20 is raised, the front edge is then lowered back to the position shown in Figure 15.

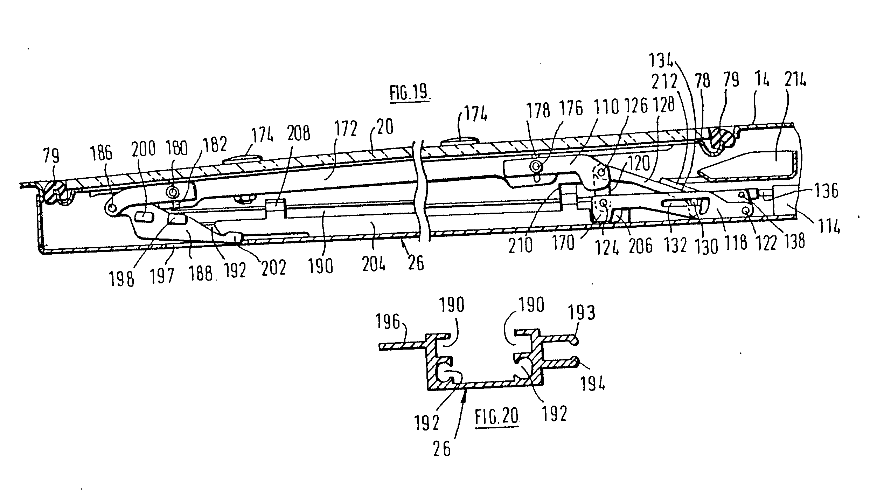

The embodiment of the invention illustrated in Figures 19 to 22 has rear guide means, comprising components 110 and 114 to 136 which are similar in construction and operation to the correspondingly referenced components of Figures 11 to 14 and which will not be described in detail. However, the link 118 of Figures 19 to 22 is provided with an additional projection 170 adjacent to the pivot 124, the function of which will be described hereinafter. The panel 20 is mounted on side members 172 by means of bolts 174. The side members 172 have longitudinally extending slots for receiving the bolts 174 so as to permit longitudinal adjustment of the position of the panel 20 relative to the opening in the vehicle roof 14.

Each longitudinal member 172 is connected to a respective support member 110 of the rear support means by means of a bolt 176 which engages in a slot 178 in the longitudinal member 174 so as to permit adjustment of the vertical position of the rear edge of the panel 20 relative to the vehicle roof 14. The connection at the front end of the longitudinal member 172 involves a similar bolt 180 and slot 182 so as to permit vertical adjustment of the front edge of the panel 20. The bolt 180 attaches the front end of the longitudinal member 172 to a front support member 184 which is connected at its front end by a pivot 186 to a front shoe 188.

Turning to Figure 20 it will be seen that the guide track 26 is of generally U-shaped cross-section, each side wall having an inwardly facing rectangular groove 190 near its upper end and an inwardly facing circular groove 192 near its lower end. The rectangular grooves 190 serve to receive projections on the front and rear guide shoes 188 and 114 while the circular grooves 192 receive drive cables (not shown) for driving the rear shoe 114. On its inner side, the guide track 26 has two flanges 193 and 194 to which vehicle interior trim may be attached. A single flange 196 is provided on the outside primarily for securing the track in position in the roof assembly.

Reverting to Figure 19, it will be noted that the shoulders on each side of the groove 190 are cut away at the front of the track 26 and that a recess 197 is cut in the bottom of the track 26. The front guide shoe 188 has rear projections 198 and front projections 200 which can engage in the grooves 190 on each side of the track 26. The rear projections 198 remain in the grooves at all times but, when the shoe 188 is at the front end of the track 26, in alignment with the recess 197, the front projections 200 are clear of the ends of these shoulders and consequently the front shoe 188 can pivot on the rear projections 198 so as to raise the pivot 186 and lower a formation 202 at the other end of the shoe 188 into the recess 197. When the shoe 188 is in the position shown in Figure 19, with the pivot 186 in its upper position, the front edge of the panel 20 is level with the vehicle roof 14. On the other hand, when the shoe 188 is pivoted to lower the pivot 186 and bring the front projections 200 into alignment with the grooves 190, the front edge of the panel 20 is lowered so as to allow it to slide below the vehicle roof 14.

In order to synchronise the aforesaid lowering of the front edge of the panel 20 with the lowering of the rear edge, in the manner already described with reference to Figures 12 and 13, a pusher member 204 extends along the track 26 between the front shoe 188 and the rear support means. Adjacent to its rear end, the pusher member 204 has a recess 206 for receiving the projection 170 adjacent to the pivot 124 on the link 118. The pusher member 204 has two upstanding projections 208 and 210 which carry formations for engagement with the shoulders between the grooves 190 and 192 on each side of the track 26. The upper end of the rearmost projection 210 is connected to a link 212 which extends above the flange 196 (Figure 20) and is coupled to a transverse drain channel 214 which is positioned below the rear edge of the panel 20 and is slidably mounted between the two tracks 26 on each side of the opening. Since the drain channel 214 is coupled to the pusher member 204, it remains positioned under the rear edge of the panel 20 at all times.

The operation of the embodiment of the invention illustrated in Figures 19 to 22 is as follows. Starting with the panel 20 in its closed position as illustrated in Figure 19, it will be observed that the rear support means is in the position described above with reference to Figure 12 and that the projection 170 is received in the recess 206 in the pusher member 204. The front end of the pusher member 204 overlies the formation 202 on the front shoe 188 with the result that the pivot 186 is in its upper position so that the front edge of the panel 20 is level with the vehicle roof 14. The downward force exerted on the pivot 186 by the weight of the panel 20 applies a clockwise couple to the shoe 188 about its rear projections 198 so as to force the formation 202 into engagement with the overlying front end of the pusher member 204.

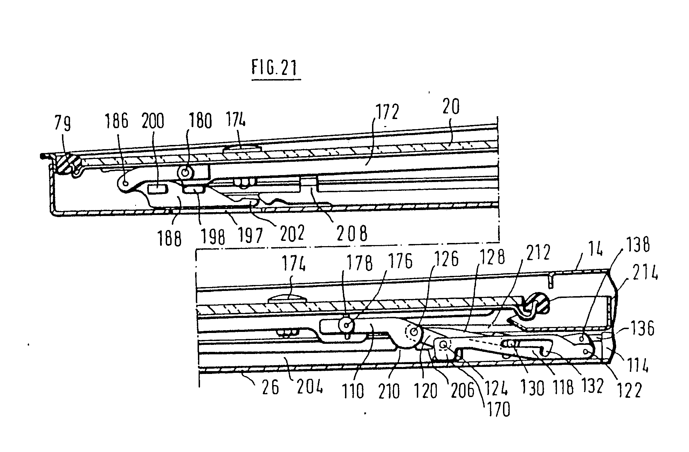

Rearward movement of the rear shoe 114 causes the rear edge of the panel 20 to be lowered, as described above with reference to Figure 13. As soon as the projection 170 on the link 118 engages against the rear of the recess 206, the pusher member 204 is drawn rearwardly, disengageing its front end from the formation 202 on the front shoe 188 which therefore pivots, under the effect of the weight of the panel 20, to the position illustrated in Figure 21 in which the front end of the panel 20 is below the level of the vehicle roof 14 and the front projections 200 on the front shoe 188 are aligned with the grooves 190 of the track 26. The panel 20 is now free to slide rearwardly in response to continued rearward movement of the rear shoes 114. When the panel 20 is to be moved back to its closed position, it slides forwardly until the front shoe 188 reaches the position shown in Figure 21, where stop means (not shown) prevent further forward movement. The front end of the pusher member 204 then rides over the formation 202 pressing it back into the recess 197 in the bottom of the track 26, thus raising the pivot 186 and, with it, the front edge of the panel 20. The rear of the panel 20 is raised in the manner already described above with reference to Figures 12 and 13.

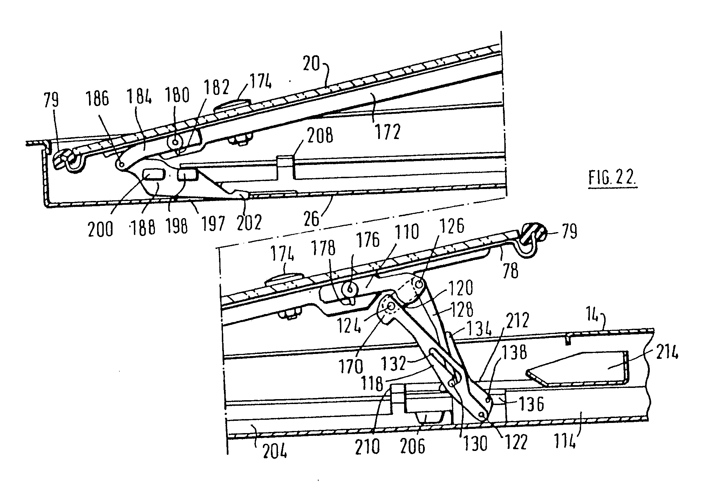

Raising of the rear edge of the panel 20 to the position shown in Figure 22 is effected in the manner described above with reference to Figure 14. The projection 170 of course disengages from the recess 206 but undesired movement of the pusher 204 along the track is prevented by the engagement of its front end with the formation 202 on the front shoe 188 which, in turn, is held in position by its depression into the recess 197.

**Claims**

1. A sliding roof assembly for a motor vehicle comprising a rigid roof panel (20) which is supported at each side by front and rear guide means (34, 80, 188; 54, 110) on respective guide tracks (26) extending along each side of an opening in the vehicle roof (14) and behind said opening below the vehicle roof (14), the front guide means (30, 80, 188) being adapted to permit pivotal movement of the panel (20) about a horizontal axis at right-angles to the guide tracks (26) and each rear guide means (54, 110) comprising a guide shoe arranged to be driven along the corresponding guide track (26) and connected to the roof panel (20) by a linkage (46, 118; 50, 120), each of the connections at the ends of the linkage being arranged to permit relative angular movement over a limited range between an orientation such that the panel (20) is in its fully lowered position and an orientation such that the linkage (46, 118; 50, 120) projects above the guide track (26), characterised in that the linkage comprises a chain of a least two links (46, 118; 50, 120), each of the connections at the ends of the chain and between adjacent links thereof being arranged to permit relative angular movement over a limited range between an orientation such that adjacent links (46, 118; 50, 120) are in line with each other when the panel (20) is in its fully lowered position and an orientation such that adjacent links (46, 118; 50, 120) are at angles of less than 180 deg to each other and project above the guide track (26), catch means (56, 128) being arranged to retain said links (46, 118; 50, 120) at said angles of less than 180 deg and the release means (41, 140) being operative to cause disengagement of said catch means (56, 128) when the angle between the track (26) and the link (46, 118) nearer to the guide shoe (40, 114) is less than a predetermined magnitude.

2. A sliding roof assembly according to claim 1, characterised in that a first link (50, 120) is connected to the roof panel (20) and a second link (46, 118) connects the first link (50, 120) to the rear guide shoe (40, 114), the length of the first link (50, 120) being such that the first link (50, 120) is substantially vertical when the roof panel (20) is level with the vehicle roof (14).

3. A sliding roof assembly according to claim 1 or 2, characterised in that the catch means (56, 128) is spring biased into its engaged position.

4. A sliding roof assembly according to claim 3, characterised in that the catch means (56) is spring biased into its engaged position by a spring (60) moulded integrally with the second link (46).

5. A sliding roof assembly according to claim 3, or 4, characterised in that the release means comprises a formation on the rear guide shoe which engages with the catch means as the roof panel moves downwards.

6. A sliding roof assembly according to any preceding claim, characterised in that the catch means comprises a pawl (56) pivotally mounted on the pivot connecting the first link to the roof panel, the pawl having a detent formation (58) on its free end which engages with a complementary formation (62) on the second link (46).

7. A sliding roof assembly according to any of claims 1 to 5, characterised in that the catch means comprises a lever (128) pivotally mounted on the pivot (126) connecting the first link (120) to the roof panel (20) and having a pin (130) at its other end which engages in an L-shaped slot (132) in the second link (118), the length of the lever (128) relative to that of the first link (120) and the position of the slot (132) in the second link (118) being such that the pin (130) travels along the long arm thereof as the links (118, 120) execute their relative angular movement and moves along the short limb when the links (118, 120) are at their angles of less than 180 deg to each other.

8. A sliding roof assembly according to claim 7, characterised in that the pin (130) is spring biased so as to move along the short limb away from its junction with the long limb, a protuberance (140) on the end of the lever (128) engaging with the track (26) to move the pin (130) back into line with the long limb as the roof panel (20) is lowered.

9. A sliding roof assembly according to any preceding claim, characterised in that the front guide means (34, 188) is provided with one part (39, 202) of a catch mechanism, the other part (38, 197) of which is secured to the guide track (26), such mechanism being arranged to disengage only when the rear edge of the roof panel (20) has been lowered.

10. A sliding roof assembly according to claim 9, characterised in that the part of the catch mechanism secured to the guide track (26) comprises a recess (197) formed in the guide track (26) adjacent to its front end and the front guide means comprises a front shoe (188) which is slidable along the guide track, into alignment with the recess (197) and is then pivotable about an axis (198) parallel to the horizontal pivot axis (186) of the panel (20) so as to raise one end of the shoe (188) carrying said latter axis (186) and lower the other end of the shoe (188) so that it abuts against one edge of said recess (197) to inhibit rearward movement while said latter axis (186) is raised link means (204) being arranged to cause said pivotal movement of the front shoe (188) in response to continued forward movement of the rear shoe (114) after the front shoe (188) has reached alignment with the recess (197).

11. A sliding roof assembly according to any preceding claim, wherein each front guide means (34, 80, 188) comprises a support arm (82) one end of which carries a guide shoe (80) arranged to slide along the corresponding guide track (26) and the other end of which is pivotally mounted on the underside of the panel (20) at a location to the rear of the guide shoe (80) for angular movement about a transverse axis, resilient means (86) for biasing said one end of the support arm (82) into abutment with a stop (84) on the underside of the panel (20) so that the front end of the latter is below the level of the vehicle roof (14), and lift means having a first part (98, 150) mounted on the panel (20) and a second part mounted on the track (26) whereby the support arm (82) is moved away from the stop (84) to raise the front edge of the panel (20) to the level of the vehicle roof (14) as the panel (20) slides into alignment with the opening therein.

12. A sliding roof assembly according to claim 11, characterised in that the support arm (82) comprises one limb (82) of a V-shaped member moulded in plastics material, the other limb (84) being secured to the panel (20) and an integrally moulded hinge formation being provided at the junction between the two limbs (82, 84).

13. A sliding roof assembly according to claim 12, characterised in that one of the limbs (82, 84) extends rearwardly beyond the hinge formation and serves as an attachment point (112) for the rear support means (110).

14. A sliding roof assembly according to claim 11, 12 or 13, characterised in that the first part of the lift means comprises a cam follower (98) and the second part comprises a camming member (92) mounted on the track (26).

15. A sliding roof assembly according to claim 14, characterised in that the camming member comprises a lever (92) which is pivotally mounted on the track (26) and carries a wind deflector (94) on its free end which is resiliently biased into a position in which it projects above the vehicle roof (14) along the front edge of the opening therein.

16. A sliding roof assembly according to claim 10, 11 or 12, characterised in that the first part of the lift means comprises a lever (150) pivotally attached both to the panel (20) and to the support arm (82) at a location adjacent to the guide shoe (80) and the second part of the lift means comprises a formation (160) on the track (26) which engages with the lever (150) to cause angular movement thereof so as to move the support arm (82) away from the stop (84).

17. A sliding roof assembly according to any of claims 10 to 16, characterised in that the front guide means (34) is provided with one part (39) of a catch mechanism, the other part (38) of which is secured to the guide track (26), such mechanism being arranged to disengage only when the rear edge of the roof panel (20) has been lowered.

**Patentansprüche**

1. Schiebedach für ein Motorfahrzeug, umfassend ein starres Dachpaneel (20), das an jeder Seite durch Frontund Heck-Führungsmittel (34, 80, 188; 54, 110) auf jeweiligen Führungsspuren (26), die sich entlang jeder Seite einer Öffnung in dem Fahrzeugdach (14) und hinter der Öffnung unterhalb des Fahrzeugdachs (14) erstrecken, gelagert ist, wobei die Front-Führungsmittel (30, 80, 188) derart ausgebildet sind, daß sie eine Schwenkbewegung des Paneels (20) um eine horizontale Achse rechtwinklig zu den Führungsspuren (26) gestatten und jede Heck-Führungsmittel (54, 110) einen Führungsschuh aufweisen, der so angeordnet ist, daß er entlang der entsprechenden Führungsspur (26) angetrieben wird und mit dem Dachpaneel (20) über ein Gestänge (46, 118; 50, 120) verbunden ist, wobei jede der Verbindungen an den Enden des Gestänges derart ausgebildet ist, daß eine Relativ-Winkelbewegung in einem begrenzten Bereich zwischen einer Orientierung, in der das Paneel (20) sich in einer vollständig abgesenkten Stellung befindet, und einer Orientierung, in der das Gestänge (46, 118; 50, 120) oberhalb der Führungsspur (26) vorsteht, möglich ist. dadurch gekennzeichnet, daß das Gestänge eine Kette aus mindestens zwei Gliedern (46, 118; 50, 120) ist, wobei jede der Verbindungen an den Enden der Kette und zwischen benachbarten Gliedern von ihr derart angeordnet ist, daß eine Relativ-Winkelbewegung in einem begrenzten Bereich zwischen einer Orientierung, in der benachbarte Glieder (46, 118; 50, 120) in einer Linie liegen, wenn sich das Paneel (20) in seiner vollständig abgesenkten Lage befindet, und einer Orientierung, in der benachbarte Glieder (46, 118; 50, 120) einen Winkel von weniger als 180° miteinander bilden und über die Führungsspur (26) vorstehen, möglich ist, Haltemittel (56, 128) derart vorgesehen sind, daß sie die Glieder (46, 118; 50, 120) in den Winkeln von weniger als 180° halten, und Freigabemitteln (41, 140) derart wirksam sind, daß ein Lösen der Haltemittel (56, 128) veranlaßt wird, wenn der Winkel zwischen der Spur (26) und dem dem Führungsschuh (40, 114) nähergelegenen Glied (46, 118) geringer ist als ein bestimmter Wert.

2. Schiebedach nach Anspruch 1, dadurch gekennzeichnet, daß ein erstes Glied (50, 120) mit dem Dachpaneel (20) verbunden ist und ein zweites Glied (46, 118) das erste Glied (50, 120) mit dem Heck-Führungsschuh (40, 114) verbindet, wobei die Länge des ersten Glieds (50, 120) so ist, daß das erste Glied (50, 120) im wesentlichen vertikal orientiert ist, wenn das Dachpanel (20) in gleicher Höhe liegt wie das Fahrzeugdach (14).

3. Schiebedach nach Anspruch 1 oder 2, dadurch gekennzeichnet, daß die Haltemittel (56, 128) in die Eingriffsposition feder-vorgespannt sind.

4. Schiebedach nach Anspruch 3, dadurch gekennzeichnet, daß die Haltemittel (56) in die eingriffsposition durch eine Feder (60) vorgespannt werden, die einstückig mit dem zweiten Glied (46) ausgebildet ist.

5. Schiebedach nach Anspruch 3 oder 4, dadurch gekennzeichnet, daß die Freigabemittel eine Formung an dem Heck-Führungsschuh aufweist, welche mit den Haltemitteln in Eingriff kommt, wenn sich das Dachpaneel nach unten bewegt.

6. Schiebedach nach einem der vorhergehenden Ansprüche, dadurch gekennzeichnet, daß die Haltemittel eine Klaue (56) aufweisen, die schwenkbar an dem das erste Glied mit dem Dachpaneel verbindenden Drehgelenk montiert ist, und daß die Klaue eine Rastnasenbildung (58) an ihrem freien Ende aufweist, welche mit einer komplementären Ausbildung (62) an dem zweiten Glied (46) in Eingriff kommt.

7. Schiebedach nach einem der Ansprüche 1 bis 5, dadurch gekennzeichnet, daß die Haltemittel einen schwenkbar an dem das erste Glied (120) mit dem Dachpaneel (20) verbindenden Drehgelenk montierten Hebel (128) aufweisen, welcher einen Stift (130) an seinem anderen Ende besitzt, der in einen L-förmigen Schlitz (132) in dem zweiten Glied (118) eingreift, wobei die Länge des Hebels (128) relativ zu der Länge des ersten Glieds (120) und die Lage des Schlitzes (182) in dem zweiten Glied (118) derart gewählt sind, daß der Stift (113) entlang dem langen Schenkel des Schlitzes läuft, wenn die Glieder (118, 120) ihre Relativ-Winkelbewegung ausführen, und sich entlang des kurzen Schenkels bewegt, wenn die Glieder (118, 120) die Winkel von weniger als 180° zueinander einnehmen.

8. Schiebedach nach Anspruch 7, dadurch gekennzeichnet, daß der Stift (130) derart feder-vorgespannt ist, daß er sich entlang dem kurzen Schenkel von dessen Übergang zu dem langen Schenkel fortbewegt, wobei ein Vorsprung (140) am Ende des Hebels (128) mit der Spur (26) in Eingriff kommt, um den Stift (130) zurück in Fluchtung mit dem langen Schenkel bewegt wird, wenn das Dachpaneel (20) abgesenkt wird.

9. Schiebedach nach einem der vorhergehenden Ansprüche, dadurch gekennzeichnet, daß die Front-Führungsmittel (34, 188) mit einem Teil (39, 202) eines Haltemechanismus ausgestattet sind, dessen anderer Teil (38, 197) an der Führungsspur (26) festgelegt ist, wobei der Mechanismus so angeordnet ist, daß er nur dann löst, wenn die Hinterkante des Dachpaneels (20) abgesenkt worden ist.

10. Schiebedach nach Anspruch 9, dadurch gekennzeichnet, daß der an der Führungsspur (26) festgelegte Teil des Haltemechanismus eine Ausnehmung (197) aufweist, die in der Führungsspur (26) neben deren Vorderende ausgebildet ist, und die Front-Führungsmittel einen Frontschuh (188) aufweisen, der verschieblich entlang der Führungsspur in Fluchtung mit der Ausnehmung (197) verschieblich und dann um eine Achse (198) parallel zu der horizontalen Schwenkachse (186) des Paneels (20) ist, um ein Ende des Schuhs (188). welches die letztegenannte Achse (186) trägt, anzuheben und das andere Ende des Schuhs (188) abzusenken, so daß es gegen eine Kante der Ausnehmung (127) anschlägt, um eine Rückwärtsbewegung zu verhindern, während die letztgenannte Achse (186) angehoben wird, und daß Verbindungsmittel (204) derart angeordnet sind, daß die Schwenkbewegung des Frontschuhs (188) ansprechend auf die fortgesetzte Vorwärtsbewegung des Heckschuhs (114) veranlaßt wird, nachdem der Frontschum (188) die fluchtende Lage mit der Ausnehmung (127) erreicht hat.

11. Schiebedach nach einem der vorhergehenden Ansprüche, bei dem jede Front-Führungsmittel (34, 80, 188) einen Tragarm aufweisen, dessen eines End einen Führungsschuh (80) trägt, der zum Gleiten entlang der entsprechenden Führungsspur (26) angeordnet ist, und dessen anderes Ende schwenkbar an der Unterseite der Paneels (20) an einer Stelle rückwärts bezüglich des Führungsschuhs (80) für eine Winkelbewegung un eine Querachse montiert ist, federelastische Mittel (86) aufweisen zum Vorspannen des einen Endes des Tragarms (82) in Eingriff mit einem Anschlag (84) an der Unterseite des Paneels (20) vorzuspannen, derart, daß dessen Vorderes Ende sich unterhalb der Höhe des Fahrzeugdachs (14) befindet, sowie Hebemittel besitzt, von denen ein erstes Teil (98, 150) an dem Paneel (20) und ein zweites Teil an der Spur (26) montiert sind, wodurch der Tragarm (82) von dem Anschlag (84) fortbewegt wird, um die Vorderkante des Paneels (20) auf die Höhe des Fahrzeugdachs (14) anzuheben, wenn das Paneel (20) in Ausrichtung mit der Öffnung in dem Dach gleitet.

12. Schiebedach nach Anspruch 11, dadurch gekennzeichnet, daß der Tragarm (82) einen Schenkel (82) eines V-förmigen Elements umfaßt, das als Kunststoff-Formstück ausgebildet ist, während der andere Schenkel (84) an dem Paneel (20) befestigt ist, wobei eine einstückig geformte Scharnieranordnung an der Verbindung zwischen den beiden Schenkeln (82, 84) vorgesehen ist.

13. Schiebedach nach Anspruch 12, dadurch gekennzeichnet, daß sich einer der Schenkel (82, 84) nach hinten über die Scharnieranordnung hinaus erstreckt und als Befestigungspunkt (112) für die Heck-Lageanordnung (110) dient.

14. Schiebedach nach Anspruch 11, 12 oder 13, dadurch gekennzeichnet, daß das erste Teil der Hebeeinrichtung einen Steuerkurvenfolger (98) und das zweite Teil ein Steuerkurvenelement (92), das an der Spur (26) montiert ist, aufweist.

15. Schiebedach nach Anspruch 14, dadurch gekennzeichnet, daß das Steuerkurvenelement einem Hebel (92) aufweist, der schwenkbar an der Spur (26) befestigt ist und einen Windabweiser (94) an seinem freien Ende aufweist, der federelastisch in eine Stellung vorgespannt ist, in der er entlang der Vorderkante der Öffnung des Fahrzeugdachs (14) über dieses vorsteht.

16. Schiebedach nach Anspruch 10, 11 oder 12, dadurch gekennzeichnet, daß das erste Teil der Hebeeinrichtung einen Hebel (150) aufweist, der schwenkbar sowohl an dem Paneel (20) als auch an dem Tragarm (82) an einer Stelle neben dem Führungsschuh (80) befestigt ist, während das zweite Teil der Hebeeinrichtung eine Ausbildung (160) an der Spur (26) aufweist, die mit dem Hebel (150) in Eingriff gelangt, um dessen Winkelbewegung zu veranlassen und den Tragarm (82) von dem Anschlag (84) fortzubewegen.

17. Schiebedach nach einem der Ansprüche 10 bis 16, dadurch gekennzeichnet, daß die Front-Führungsmittel (34) mit einem Teil (39) eines Haltemechanismus ausgestattet sind, dessen anderes Teil (38) an der Führungsspur (26) festgelegt ist, wobei der Mechanismus derart ausgebildet ist, daß er nur dann löst, wenn die rückwärtige Kante des Dachpaneels (20) abgesenkt wurde.

**Revendications**

1. Un ensemble de toit coulissant pour un véhicule motorisé comprenant un panneau de toit rigide (20) qui est supporté de chaque côté par des moyens de guidage avant et arrière (34, 80, 188; 54, 110) sur des rails de guidage respectifs (26) s'étendant le long de chaque côté d'une ouverture ménagée dans le toit du véhicule (14) et derrière ladite ouverture sous le toit du véchicule (14), les moyens de guidage avant (30, 80, 188) étant adaptés pour permettre le pivotement du panneau (20) autour d'un axe horizontal, perpendiculairement aux rails de guidage (26) et chaque moyen de guidage arrière (54, 110) comprenant un patin de guidage disposé de manière à être entraîné le long du rail de guidage correspondant (26) et relié au panneau de toit (20) par un bras de liaison articulé (46, 118; 50, 120), chacun des moyens de connexion aux extrémités du bras de liasion articulé étant disposé de manière à permettre le mouvement angulaire relatif sur une étendue limitée entre une orientation telle que le panneau (20) est dans sa position totalement abaissée et une orientation telle que le bras de liaison articulé (46, 118; 50, 120) fait saillie audessus du rail de guidage (26), caractérisé en ce que l'ensemble de liaison articulé est constituée par une chaîne d'au moins deux chaînons articulés (46, 118; 50, 120), chacun des moyens de connexion, aux extrémités de la chaîne et entre les chaînons articulés adjacents de celle-ci étant disposé de manière à permettre un mouvement angulaire relatif sur une étendue limitée entre une orientation telle que les chaînons adjacents (46, 118; 50, 120) sont alignés les uns par rapport aux autres lorsque le panneau (20) est dans sa position totalement abaissée et une orientation telle que les chaînons articulés adjacents (46, 118; 50, 120) font des angles les uns par rapport aux autres inférieurs à 180° et font saillie au-dessus du rail de guidage (26), des moyens d'accrochage (56, 128) étant disposés pour retenir 35 lesdits chaînons (46, 118; 50, 120) auxdits angles inférieurs à 180° et les moyens de dégagement (41, 140) étant actionnés pour assurer le dégagement desdits moyens d'accrochage (56, 128) lorsque l'angle entre le rail (26) et le chaînon (46, 118) situé le plus près du patin de guidage (40, 114) est inférieur à une amplitude prédéterminée.

2. Un ensemble de toit coulissant selon la revendication 1, caractérisé en ce que un premier chaînon (50, 120) est relié au panneau de toit (20) et un second chaînon (46, 118) relie le premier chaînon (50, 120) au patin de guidage arrière (40, 114), la longueur du premier chaînon (50, 120), étant telle que le premier chaînon (50, 120) est sensiblement vertical lorsque le panneau de toit (20) est à niveau avec le toit du véhicule (14).

3. Un ensemble de toit coulissant selon la revendication 1 ou 2, caractérisé en ce que les moyens d'accrochage (56, 128) sont constitués par un ressort chargé dans sa position engagée.

4. Un ensemble de toit coulissant selon la revendication 3, caractérisé en ce que les moyens d'accrochage (56), sont constitués par un ressort charagé dans sa position engagée par un ressort (60) moulé d'une seule pièce avec le second chaînon (46).

5. Un ensemble de toit coulissant selon la revendication 3 ou 4, caractérisé en ce que les moyens de dégagement comportent une structure ménagée sur le patin de guidage arrière qui vient en prise avec les moyens d'accrochage lorsque le panneau de toit se déplace vers le bas.

6. Un ensemble de toit coulissant selon l'une quelconque des revendications précédentes, caractérisé en ce que les moyens d'accrochage comportent un cliquet (56) monté à pivotement sur l'axe de pivotement reliant le premier chaînon au panneau de toit, le cliquet comportant une butée (58) à son extrémité libre qui vient en prise avec une structure complémentaire (62) ménagée sur le second chaînon (46).

7. Un ensemble de toit coulissant selon l'une quelconque des revendications 1 à 5, caractérisé en ce que les moyens d'accrochage comportent un levier (128) monté à pivotement sur l'axe de pivotement (126) reliant le premier chaînon (120) au panneau de toit (20) et ayant un axe d'articulation (130) à son autre extrémité qui s'engage dans une fente en forme de L (132) dans le second chaînon (118), la longueur du levier (128) par rapport à celle du premier chaînon (120) et la position de la fente (132) dans le second chaînon (118) étant telles que l'axe d'articulation (130) se déplace le long du bras long de celle-ci lorsque les chaînons (118, 120) exécutent leur mouvement angulaire relatif et se déplacent le long du bras court lorsque les chaînons (118, 120) font un angle inférieur à 180° les uns par rapport aux autres.

8. Un ensemble de toit coulissant selon la revendication 7, caractérisé en ce que l'axe d'articulation (130) est poussé par un ressort de manière à se déplacer le long du bras court en s'éloignant de son articulation avec le bras long, une saillie (140) ménagée sur l'extrémité du levier (128) venant en prise avec le rail (26) pour déplacer l'axe d'articulation (130) vers l'arrière en alignement avec le bras long lorsque le panneau de toit (20) est abaissé.

9. Un ensemble de toit coulissant selon l'une quelconque des revendications précédentes, caractérisé en ce que les moyens de guidage avant (34, 188) comportent une partie (39, 202) d'un mécanisme d'accorchage, l'autre partie (38, 197), étant fixée au rail de guidage (26), ce mécanisme étant disposé de manière à se dégager seulement lorsque le bord arrière du panneau de toit (20) a été abaissé.

10. Un ensemble de toit coulissant selon la revendication 9, caractérisé en ce que la partie du mécanisme d'accrochage fixé au rail de guidage (26) comporte un logement (197) ménagé dans le rail de guidage (26) en position adjacente à son extrémité avant et les moyens de guidage avant comportent un patin avant (188) qui peut coulisser le long du rail de guidage, en alignement avec le logement (197) et que peut alors pivoter autour d'un axe (198) parallèle à l'axe de pivotement horizontal (186) du panneau (20) de manière à soulever une extrémité du patin (188) portant ledit dernier axe (186) et abaisser l'autre extrémité du patin (188) de manière à ce qu'elle vienne buter contre un bord dudit logement (197) pour empêcher le mouvement vers l'arrière alors que ledit dernier axe (186) est soulevé, des moyens de liaison articulés (204) étant disposés de manière à assurer ledit mouvement de pivotement dudit patin avant (188) en réponse à un mouvement continu vers l'avant du patin arrière (114) après que le patin avant (188) s'est aligné avec le logement (197).

11. Un ensemble de toit coulissant selon l'une quelconque des revendications précédentes, dans lequel chaque moyen de guidage avant (34, 80, 188) comprend un bras de support (82) dont une extrémité porte un patin de guidage (80) destiné à coulisser le long du rail de guidage correspondant (26) et dont l'autre extrémité est montée à pivotement sur la face inférieure du panneau (20) en un point situé à l'arrière du patin de guidage (80) pour un déplacement angulaire autour d'un axe transversal, des moyens élastiques (86) pour pousser ladite première extrémité du bras de support (82) à venir contre une butée (84) ménagée sur la face inférieure du panneau (20) de telle sorte que l'extrémité avant de ce dernier est en-dessous du niveau du toît du véhicule (14), et des moyens de levage comportant une première partie (98, 150) montée sur le panneau (20) et une seconde partie montée sur le rail (26) de manière que le bras de support (82) se déplace en s'éloignant de la butée (84) pour soulever le bord avant du panneau (20) jusqu'au niveau du toît du véhicule (14) lors que le panneau (20) coulisse en alignement avec l'ouverture de celui-ci.

12. Un ensemble de toit coulissant selon la revendication 11, caractérisé en ce que le bras de support (82) comprend un jambage (82) d'un élément en forme de V moulé en matière plastique, l'autre jambage (84) étant fixé au panneau (20) et une charnière moulée d'une seule pièce ménagée à la jonction entre les deux jabages (82, 84).

13. Un ensemble de toit coulissant selon la revendication 12, caractérisé en ce que l'un des jambages (82, 84), s'étend vers l'arrière au-delà de la charnière et sert de point de fixation (112) pour les moyens de support arrière (110).

14. Un ensemble de toit coulissant selon les revendications 11, 12 ou 13, caractérisé en ce que la première partie des moyens de levage comporte un galet de came (98) et la seconde partie comporte un élément de came (92) monté sur le rail (26).

15. Un ensemble de toit coulissant selon la revendication 14, caractérisé en ce que l'élément de came comporte un levier (92) qui est monté à pivotement sur le rail (26) et qui porte un déflecteur de vent (94) sur son extrémité libre qui est poussé de façon élastique dans une position dans laquelle il fait saillie au-dessus du toit du véhicule (14) le long du bord avant de l'ouverture ménagée dans relui-ci.

16. Un ensemble de toit coulissant selon les revendications 10, 11 ou 12, caractérisé en ce que la première partie des moyens de levage comporte un levier (150) fixé à pivotement à la fois au panneau (20) et au bras de support (82) en un point adjacent au patin de guidage (80) et la seconde partie des moyens de levage comporte une structure (160) menagée sur le rail (26) qui vient en prise avec le levier (150) pour assurer le mouvement angulaire de celuici de manière à déplacer le bras de support (82) et à l'éloigner de la butée (84).

17. Un ensemble de toit coulissant selon l'une quelconque des revendications 10 à 16, caractérisé en ce que les moyens de guidage avant (34) sont munis d'une partie (39) du mécanisme d'accrochage, dont l'autre partie (38) est fixée au rail de guidage (26), ce mécanisme étant disposé de manière à se dégager seulement lorsque le bord arrière du panneau de toit (20) a été abaissé.

FIG.1.

FIG. 2

FIG. 3

FIG. 4

FIG.5

FIG.6

FIG.7.

FIG. 8.

FIG.9.

FIG. 10

0 140 491

FIG.11.

0 140 491

FIG.12.

FIG.13.

FIG.14.

FIG.15.

FIG.16.

FIG.17

FIG.18

FIG.19

FIG.20

FIG.21

FIG. 22.